# EUROPEAN PATENT APPLICATION

(11) **EP 2 907 793 A1**
(43) Date of publication of application: **19.08.2015**
(21) Application number: 13845347.7
(22) Date of filing: 10.10.2013
(51) Int. Cl.: C01B 31/20, B01D 53/62, F01K 7/38, F01K 17/04

(54) **CARBON DIOXIDE RECOVERY SYSTEM**

(30) Priority: 12.10.2012 US 201213650336
(71) Applicant: Mitsubishi Heavy Industries, Ltd., Tokyo 108-8215 (JP)
(72) Inventor: YONEKAWA, Takahito, New York, New York 10111 (US); INUI, Masayuki, New York, New York 10111 (US); NAKAYAMA, Koji, New York, New York 10111 (US); TSUJIUCHI, Tatsuya, New York, New York 10111 (US); SORIMACHI, Yoshiki, Tokyo 108-8215 (JP)
(74) Representative: Bongiovanni, Simone
(86) International application number: PCT/JP2013/077580
(87) International publication number: WO 2014/058007

(57) **Abstract**

It is an object to supply stable motive power to a compressor even if load variations have occurred in an electric power station. A CO₂ recovery system includes a CO₂ compressor (12) that compresses recovered CO₂ removed by a CO₂ recovery unit (11), a steam turbine (13) that supplies motive power to the CO₂ compressor (12), and an auxiliary motor (14) that, if there is a shortage of the motive power from the steam turbine (13), supplies the CO₂ compressor with motive power in an amount corresponding to the shortage.

## Description

### {Technical Field}

The present invention relates to a carbon-dioxide recovery system that recovers carbon dioxide (CO₂) from exhaust gas generated in facilities equipped with a boiler, a gas turbine, or the like, such as a thermal power station.

### {Background Art}

To suppress global warming, it is desired to suppress the generation of CO₂. Along with this, also in facilities equipped with a boiler, a gas turbine, or the like that burns fuel, such as a thermal power station, the exhaust gas generated during their operation contains CO₂; therefore, there is a strong demand to suppress the amount of emission thereof.

To suppress the amount of CO₂ emission in such facilities, for example, an amine absorption method for absorbing CO₂ contained in exhaust gas generated from a boiler, a gas turbine, or the like that burns fuel, by bringing the exhaust gas into contact with an amine-based absorbing solution (hereinafter referred to as "CO₂ absorbing solution"), is used. Furthermore, for example, a method involving recovering CO₂ from a CO₂ absorbing solution after absorbing CO₂ from exhaust gas and injecting the recovered CO₂ into the ground for storage has recently been proposed.

A known method for compressing CO₂ recovered from a CO₂ absorbing solution is, for example, a method in which the CO₂ is compressed by rotating a steam turbine by using discharged steam used in generating electricity in an electric power station, and a compressor is driven with the rotational motive power of this steam turbine (see PTLs 1 and 2).

### {Citation List}

### {Patent Literature}

{PTL 1} Publication of Japanese Patent No. 2792777
{PTL 2} Publication of Japanese Patent No. 4274846

### {Summary of Invention}

### {Technical Problem}

Discharged stream used in a steam turbine for driving a compressor includes steam discharged from a high-pressure steam turbine and stream discharged from an intermediate-pressure steam turbine used in generating electricity in an electric power station, and the pressure of the discharged steam changes with load variations of the electric power station.

Accordingly, when the pressure of the discharged steam has decreased due to load variations, there is a possibility that the motive power of the foregoing steam turbine will decrease, thus causing a shortage of motive power for the compressor. The shortage of motive power for the compressor will decrease the rotational speed of the compressor. This makes it impossible, for example, to compress all of the CO₂ recovered from the CO₂ absorbing solution with the compressor, and thus, part of the CO₂, which has been recovered with considerable effort, has to be released into the atmosphere. Furthermore, in the case where discharged steam is supplied from a power-generation steam turbine in accordance with the motive power for the compressor, the amount of low-pressure steam discharged from the steam turbine of the compressor becomes larger than the amount of low-pressure steam necessary for the CO₂ recovery system, which requires a cooler for condensing the excess low-pressure steam, causing a larger drop in power output from the electric power station due to the recovery and compression of CO₂.

An object of the present invention is to provide a carbon-dioxide recovery system in which motive power can be supplied to a compressor stably and economically even if load variations have occurred in an electric power station. {Solution to Problem}

A first aspect of the present invention is a carbon-dioxide recovery system comprising: a power-generation steam turbine for use in power generation; a CO₂ recovery unit for absorbing and removing CO₂ in exhaust gas generated in a power station; a compressor for compressing the CO₂ removed by the CO₂ recovery unit; a compressor steam turbine for driving the compressor; an auxiliary motor for supplementing the motive power for the compressor supplied by the compressor steam turbine; a motor control unit for controlling the auxiliary motor; and a rotational-speed sensor for measuring the rotational speed of the compressor, wherein the compressor steam turbine is driven by discharged steam discharged from the power-generation steam turbine; and the motor control unit controls the auxiliary motor so that the rotational speed measured by the rotational-speed sensor is maintained constant at a predetermined rotational speed.

### {Advantageous Effects of Invention}

The present invention offers the advantage that all of the CO₂ recovered from a CO₂ absorbing solution can be economically compressed by a compressor even if load variations have occurred in an electric power station.

### {Brief Description of Drawings}

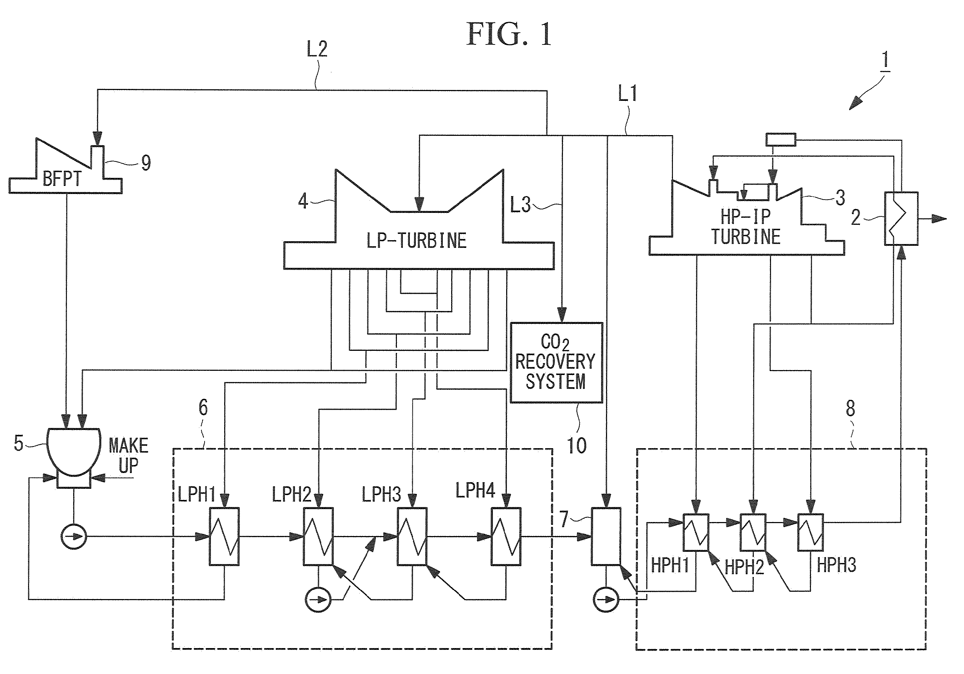

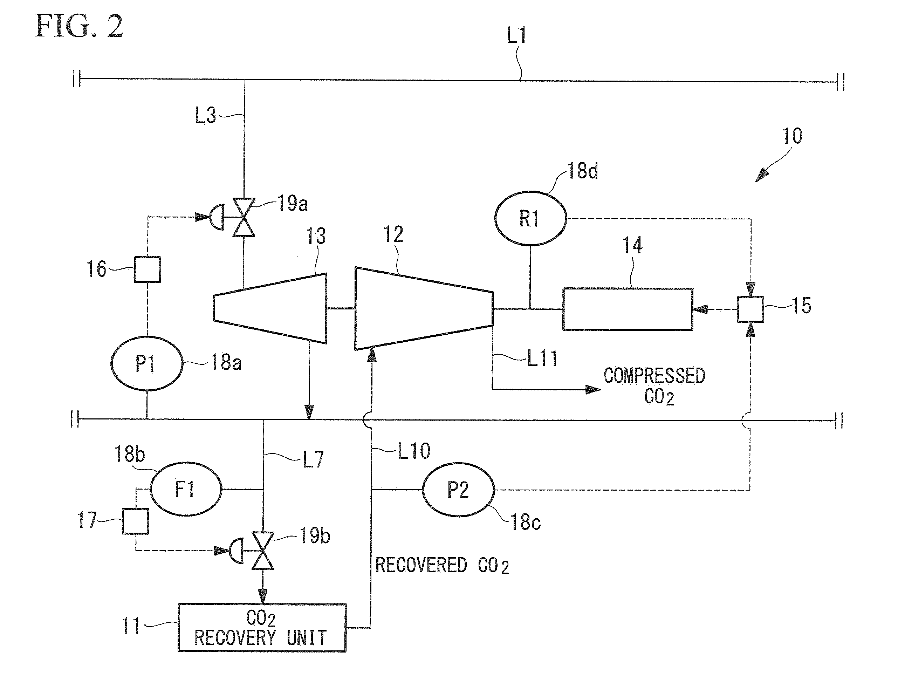

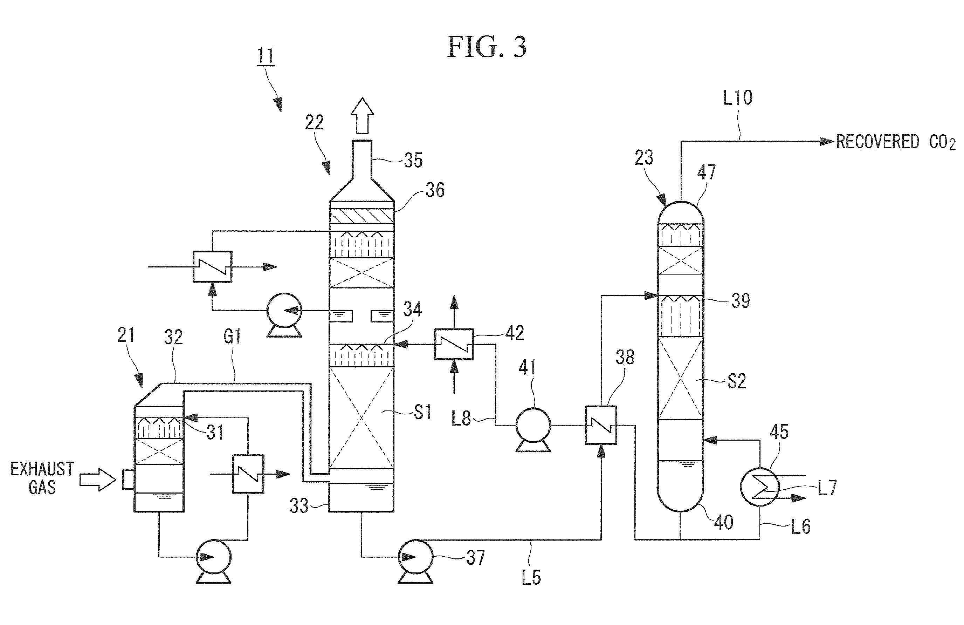

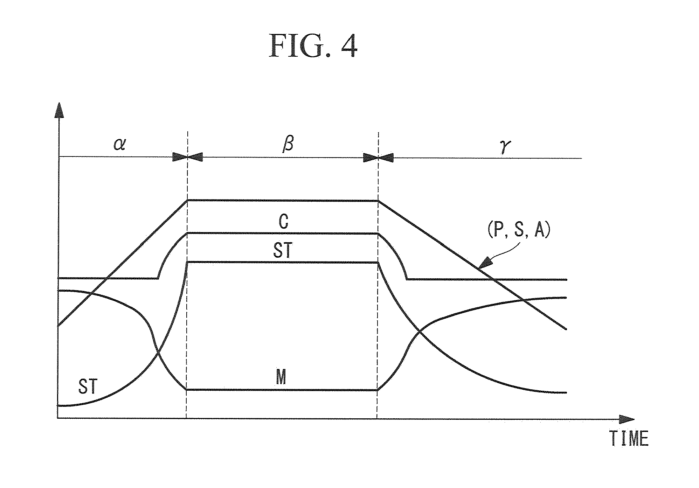

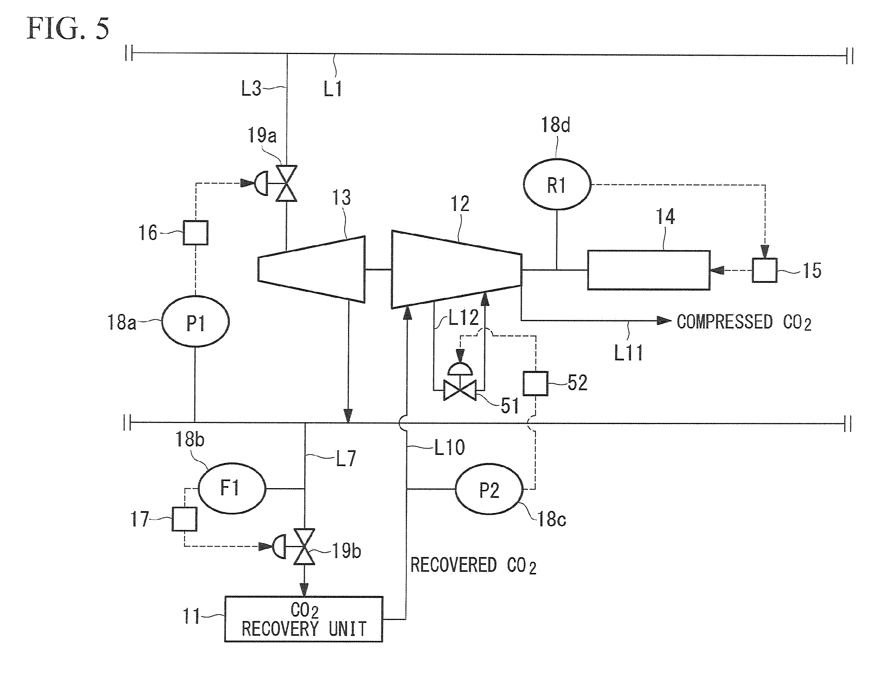

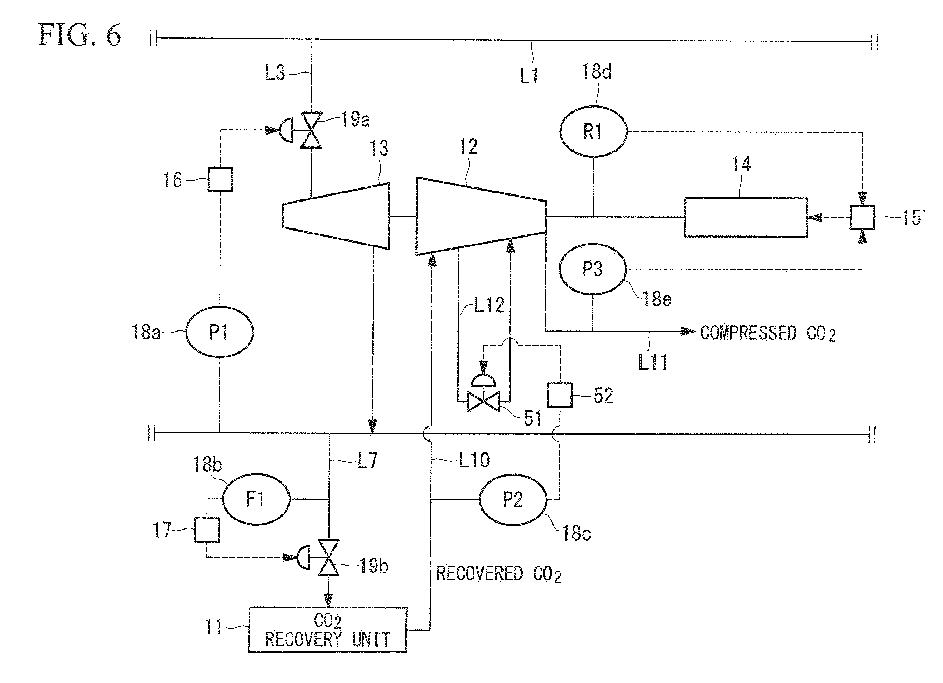

{Fig. 1} Fig. 1 is a diagram showing, in outline, the configuration of a steam power generation system to which a CO₂ recovery system according to a first embodiment of the present invention is applied.
{Fig. 2} Fig. 2 is a diagram showing, in outline, the configuration of the CO₂ recovery system according to the first embodiment of the present invention.
{Fig. 3} Fig. 3 is a diagram showing an example of the configuration of a CO₂ recovery unit shown in Fig. 2.
{Fig. 4} Fig. 4 is a diagram showing an example of temporal changes in power station load, the pressure of steam supplied to a steam turbine, motive power obtained by the steam turbine, required motive power for a CO₂ compressor, required motive power for an auxiliary motor, and CO₂ recovery amount in a CO₂ recovery unit.
{Fig. 5} Fig. 5 is a diagram showing, in outline, the configuration of a CO₂ recovery system according to a second embodiment of the present invention.
{Fig. 6} Fig. 6 is a diagram showing, in outline, the configuration of a CO₂ recovery system according to a third embodiment of the present invention.

### {Description of Embodiments}

Carbon-dioxide recovery systems (hereinafter referred to as "CO₂ recovery systems") according to embodiments of the present invention will be described hereinbelow using the drawings.

### {First Embodiment}

Fig. 1 is a diagram showing, in outline, the configuration of a power generation system to which a CO₂ recovery system according to a first embodiment of the present invention is applied.

As shown in Fig. 1, a power generation system 1 is equipped with, as main components, an exhaust gas boiler (heat recovery steam generator: HRSG) 2, a high-pressure steam turbine 3, a low-pressure steam turbine 4, a condenser 5, a low-pressure feedwater heater 6, a deaerator 7, a high-pressure feedwater heater 8, and a carbon-dioxide recovery system 10.

In such a power generation system 1, the exhaust gas boiler 2 is supplied with exhaust gas from a gas turbine facility or the like (not shown), in which steam is generated using the heat of the exhaust gas. The steam generated in the exhaust gas boiler 2 is supplied to the high-pressure steam turbine 3 and is used to generate electricity. The discharged steam that has driven the high-pressure steam turbine 3 is supplied to the low-pressure steam turbine 4, where the steam is used to generate electricity and is thereafter distributed to the condenser 5. A condensate produced in the condenser 5 is distributed to the exhaust gas boiler 2 via the low-pressure feedwater heater 6, the deaerator 7, and the high-pressure feedwater heater 8.

A steam pipe L2 for distributing part of the steam to a boiler feedwater pump drive turbine (boiler feed pump turbine: BFPT) 9 and a steam pipe L3 for distributing part of the steam to the CO₂ recovery system 10 are connected to a steam pipe L1 for distributing the steam from the high-pressure steam turbine 3 to the low-pressure steam turbine 4.

As shown in Fig. 2, the CO₂ recovery system 10 is equipped with, as main components, a CO₂ recovery unit 11, a CO₂ compressor 12, a steam turbine 13 for driving the CO₂ compressor 12, an auxiliary motor 14 for assisting driving of the CO₂ compressor 12, and a motor control unit 15 for controlling the auxiliary motor 14.

The steam supplied to the CO₂ recovery system 10 through the steam pipe L3 is distributed to the steam turbine 13, where the steam is used as a driving source for the steam turbine 13. The steam, after performing work in the steam turbine 13, is distributed to the CO₂ recovery unit 11 through a steam pipe L7 and is used for heat exchange in a reboiler 45 (see Fig. 3) described later.

As shown in Fig. 3, the CO₂ recovery unit 11 is equipped with a cooling tower 21 that cools the exhaust gas, an absorption tower 22 that absorbs and recovers CO₂ from the exhaust gas by using a CO₂ absorbing solution, and a regeneration tower 23 that extracts CO₂ from the CO₂ absorbing solution that has absorbed CO₂ and regenerates the CO₂ absorbing solution.

In the CO₂ recovery unit 11, the cooling tower 21 is supplied with exhaust gas that contains CO₂, discharged from, for example, the exhaust gas boiler 2, a gas turbine facility (not shown), and so on. The exhaust gas supplied to the cooling tower 21 is cooled by cooling water ejected from nozzles 31. The CO₂-containing exhaust gas cooled in the cooling tower 21 is distributed from a top portion 32 of the cooling tower 21 to a tower bottom portion 33 of the absorption tower 22 through an exhaust gas line G1.

In the absorption tower 22, the CO₂ absorbing solution is supplied to nozzles 34 provided at the upper part of the absorption tower 22 and is ejected from the nozzles 34 downwards into the absorption tower 22. An example of the CO₂ absorbing solution is an amine solution based on alkanolamine. This CO₂ absorbing solution is brought into counterflow contact with the exhaust gas coming up from the tower bottom portion 33 while passing through a filler S1 provided in a space below the nozzles 34 in the absorption tower 22. Thus, the CO₂ in the exhaust gas is absorbed into the CO₂ absorbing solution. This allows the CO₂ to be removed from the exhaust gas. Here, the exhaust gas from which CO₂ is removed is referred to as purified gas. The purified gas is discharged from a tower top portion 35 of the absorption tower 22.

Here, since the CO₂ absorbing solution generates heat, increasing in the liquid temperature, because it absorbs CO₂, the purified gas can contain water vapor and so on. The absorption tower 22 is provided with a mist eliminator 36 at the upper part thereof. Since the water vapor and so on contained in the purified gas are separated and removed from the purified gas by the mist eliminator 36, leakage thereof to the outside of the absorption tower 22 is suppressed.

The CO₂ absorbing solution that has absorbed CO₂ while passing through the filler S1 in the absorption tower 22 downwards from above (hereinafter referred to as "rich solution") accumulates in the tower bottom portion 33. The accumulated rich solution is distributed to the regeneration tower 23 by a pump 37 through a liquid feed line L5 that connects the tower bottom portion 33 of the absorption tower 22 and the upper part of the regeneration tower 23. The liquid feed line L5 is provided with a heat exchanger 38. In the heat exchanger 38, the rich solution distributed from the absorption tower 22 to the regeneration tower 23 is heated by exchanging heat with the CO₂ absorbing solution regenerated and cooled in the regeneration tower 23, to be described later (hereinafter referred to as "lean solution").

The regeneration tower 23 is provided with nozzles 39 at the upper part therein, and the rich solution heated by the heat exchanger 38 is ejected downward from the nozzles 39.

A filler S2 is provided below the nozzles 39, and the CO₂ in the rich solution is released by an endothermic reaction due to counterflow contact while the rich solution passes through the heated filler S2 in the regeneration tower 23. By the time the rich solution reaches a tower bottom portion 40 of the regeneration tower 23, most of the CO₂ is removed therefrom, and the rich solution is regenerated as a lean solution.

Furthermore, the tower bottom portion 40 of the regeneration tower 23 is provided with a circulating path L6 through which part of the lean solution is circulated to above the tower bottom portion 40. The circulating path L6 is provided with the reboiler 45. This reboiler 45 is provided with a steam pipe L7 for heating the lean solution.

Part of the lean solution in the tower bottom portion 40 is supplied to the reboiler 45 through the circulating path L6, where it is heated by heat exchange with high-temperature steam passing through the steam pipe L7 and is thereafter returned to the regeneration tower 23. Here, the high-temperature steam supplied through the steam pipe L7 is the steam after performing work in the steam turbine 13 shown in Fig. 2. In other words, the steam discharged from the steam turbine 13 is distributed to the reboiler 45 through the steam pipe L7, where the steam exchanges heat with the lean solution to heat the lean solution.

CO₂ gas is further released from the lean solution in the tower bottom portion 40 due to the thermal energy of the heated lean solution. Furthermore, the filler S2 is also indirectly heated by heating the lean solution, and CO₂ gas is released from the rich solution during gas-liquid contact in the filler S2, as described above.

In this way, the lean solution that is regenerated by releasing CO₂ gas in the regeneration tower 23 is returned to the absorption tower 22 by a pump 41 through a liquid feed line L8 that connects the tower bottom portion 40 of the regeneration tower 23 and the upper part of the absorption tower 22.

The liquid feed line L8 is provided with the heat exchanger 38 and a water-cooled cooler 42. The lean solution passing through the liquid feed line L8 is cooled in the heat exchanger 38 by exchanging heat with the rich solution supplied from the absorption tower 22 to the regeneration tower 23 and is further sufficiently cooled by the water-cooled cooler 42 to a temperature suitable for absorbing CO₂ by exchanging heat with cold water.

A CO₂ outlet pipe L10 is connected to a tower top portion 47 of the regeneration tower 23. The CO₂ released from the rich solution (hereinafter referred to as "recovered CO₂") in the regeneration tower 23 is distributed to the CO₂ compressor 12 shown in Fig. 2 through the CO₂ outlet pipe L10.

Furthermore, the CO₂ outlet pipe L10 is provided with a cooler, a gas-liquid separator, and so on (not shown), condensed water in the recovered CO₂ is separated in the gas-liquid separator, and the separated condensed water is returned to the regeneration tower 23. Thus, the recovered CO₂ from which the condensed water is separated is distributed to the CO₂ compressor 12.

In the CO₂ compressor 12, the recovered CO₂ is compressed. The compressed recovered CO₂ is fed out to a storage process through, for example, a CO₂ outlet pipe L11.

In the CO₂ recovery system 10, as shown in Fig. 2, the steam pipe L3 is provided with a governor (speed governing unit) 19a, and the steam pipe L7 is provided with a flow-rate control valve 19b. Furthermore, the steam pipe L3 is provided with a pressure sensor 18a for measuring the pressure P1 of steam, and the steam pipe L7 is provided with a flow-rate sensor 18b for measuring the flow rate F1 of steam supplied to the reboiler 45.

The measured pressure P1 from the pressure sensor 18a is input to the governor control unit 16. The governor control unit 16 controls the degree of opening of the governor 19a so that the measured pressure P1 reaches a preset predetermined target pressure. For example, in the case where the amount of steam supplied to the CO₂ recovery unit 11 is constant, the degree of governor opening is controlled so as to decrease as the steam pressure at the inlet of the low-pressure steam turbine increases.

The measured flow rate F1 from the flow-rate sensor 18b is input to a flow-rate control unit 17. The flow-rate control unit 17 controls the degree of opening of the flow-rate control valve 19b so that the measured flow rate F1 reaches a preset predetermined target flow rate. The flow-rate control unit 17 controls the degree of opening of the flow-rate control valve 19b on the basis of the amount of steam to be supplied to the CO₂ recovery unit 11.

Since the degree of opening of the flow-rate control valve 19b is adjusted by the flow-rate control unit 17, the flow rate of the low-pressure steam supplied to the reboiler 45 of the CO₂ recovery unit 11 is adjusted. Thus, the amount of CO₂ recovered in the CO₂ recovery unit 11 is adjusted, so that the flow rate of the recovered CO₂ discharged from the CO₂ recovery unit 11 through the CO₂ outlet pipe L10 is adjusted.

Furthermore, the CO₂ outlet pipe L10 that distributes the recovered CO₂ from the CO₂ recovery unit 11 to the CO₂ compressor 12 is provided with a pressure sensor 18c for measuring the pressure P2 of the recovered CO₂. Furthermore, the CO₂ compressor 12 is provided with a rotational-speed sensor 18d for detecting the rotational speed R1.

For example, the motor control unit 15 controls the auxiliary motor 14 so that the measured rotational speed R1 reaches a predetermined target rotational speed. Furthermore, in the case where the measured rotational speed R1 is higher than the predetermined target rotational speed, the motor control unit 15 controls the auxiliary motor 14 so that the measured pressure P2 reaches a predetermined target pressure, and in the case where the measured rotational speed R1 is lower than or equal to the predetermined target rotational speed, the motor control unit 15 may control the auxiliary motor 14 so that the measured rotational speed R1 reaches the predetermined target rotational speed. Alternatively, the motor control unit 15 may control the auxiliary motor 14 so that the measured pressure P2 reaches the predetermined target pressure.

In the CO₂ recovery system 10 with such a configuration, since part of the low-pressure steam (for example, about 4 kg/cm²G or higher and 50 kg/cm²G or lower) that is supplied to the low-pressure steam turbine 4 (see Fig. 1) through the steam pipe L1 is branched off to the steam pipe L3, and furthermore, since the degree of opening of the governor 19a is controlled by the governor control unit 16, the pressure and amount of steam introduced to the steam turbine 13 is adjusted. Since such low-pressure steam is supplied to the steam turbine 13, the steam turbine 13 is rotated, and since the motive power thereof is transmitted to the CO₂ compressor 12, the CO₂ compressor 12 rotates.

The low-pressure steam (for example, about 3 kg/cm²G, about 140 °C), after driving the steam turbine 13, is supplied to the reboiler 45 of the CO₂ recovery unit 11 through the steam pipe L7.

The low-pressure steam is condensed in the reboiler 45, is thereafter increased in pressure by, for example, a reboiler condensate pump (not shown), is mixed with boiler feedwater to thereby increase the temperature of the boiler feedwater, and is supplied to the exhaust gas boiler 2 (see Fig. 1).

On the other hand, the recovered CO₂ generated in the CO₂ recovery unit 11 is distributed to the CO₂ compressor 12 through the CO₂ outlet pipe L10 and is compressed by the CO₂ compressor 12.

At that time, the auxiliary motor 14 is controlled by the motor control unit 15 on the basis of the measured pressure P2 of the recovered CO₂ flowing through the CO₂ outlet pipe L10 and the measured rotational speed of the CO₂ compressor 12 so that the rotational speed of the CO₂ compressor 12 is maintained constant.

Specifically, in the case where the rotational speed R1 of the CO₂ compressor 12 is lower than the predetermined rotational speed, for example, in the case where the pressure of discharged steam supplied to the steam turbine 13 is decreased due to load variations or the like, so that the rotational motive power of the steam turbine 13 becomes less than the motive power necessary for rotating the CO₂ compressor 12 at the predetermined rotational speed, the motor control unit 15 controls the auxiliary motor 14 so that the shortage of the motive power can be compensated for by the motive power from the auxiliary motor 14. This allows the rotational speed R1 of the CO₂ compressor 12 to be maintained constant.

Furthermore, in the case where the CO₂ compressor 12 rotates at the predetermined rotational speed, in other words, in the case where the rotational motive power of the steam turbine 13 is larger than or equal to the motive power necessary for rotating the CO₂ compressor 12 at a constant rotational speed, the motor control unit 15 drives the CO₂ compressor 12 only with the motive power of the steam turbine 13 without driving the auxiliary motor 14.

Such control allows best use of the energy of the discharged stream.

The recovered CO₂ compressed by the CO₂ compressor 12 is fed out to the storage process through, for example, the CO₂ outlet pipe L11.

Fig. 4 is a diagram showing an example of temporal changes in the power station load P, the pressure S of steam supplied to the steam turbine 13, motive power ST obtained by the steam turbine 13, required motive power C for the CO₂ compressor 12, required motive power M for the auxiliary motor 14, and CO₂ recovery amount A in the CO₂ recovery unit 11.

As shown in Fig. 4, in area α in which the power station load P increases, the steam pressure S and the CO₂ recovery amount A also increase similarly to the power station load P.

On the other hand, the motive power ST of the steam turbine 13 increases gradually as the power station load P and so on increase. Furthermore, the required motive power C for the CO₂ compressor 12 is maintained constant at the minimum required motive power for avoiding a surge line, and when the CO₂ recovery amount A increases as the power station load P increases, the required motive power C increases gradually in accordance with the CO₂ recovery amount A. The required motive power M for the auxiliary motor 14 is a value obtained by subtracting the motive power ST of the steam turbine 13 from the required motive power C for the CO₂ compressor 12.

In area β in which the power station load P is constant at the maximum load, the steam pressure S and the CO₂ recovery amount A are also constant. Furthermore, along with this, the motive power ST of the steam turbine 13, the required motive power C for the CO₂ compressor 12, and the required motive power M for the auxiliary motor 14 are also constant.

Furthermore, in area y in which the power station load P drops from the maximum load, the steam pressure S and the CO₂ recovery amount A also decrease similarly. Furthermore, the motive power ST of the steam turbine 13 gradually decreases with the decrease in steam pressure S. The required motive power C for the CO₂ compressor 12 decreases gradually with the decrease in the CO₂ recovery amount A, and when the required motive power C reaches the minimum required motive power for avoiding a surge line, it is maintained constant at that value. Then, a shortage of the motive power of the steam turbine 13 relative to the required motive power C for the CO₂ compressor 12 is compensated for by the motive power from the auxiliary motor 14.

As described above, with the CO₂ recovery system 10 according to this embodiment, even if there is a shortage of motive power for the CO₂ compressor 12 because the pressure of the discharged steam supplied to the steam turbine 13 decreases due to load variations in the power station, the shortage is supplemented by the motive power of the auxiliary motor 14. Accordingly, even if load variations have occurred, a shortage of motive power of the CO₂ compressor 12 can be avoided because the auxiliary motor 14 is driven so as to follow the load variations, so that the CO₂ compressor 12 can be rotated at a constant rotational speed. This allows all the recovered CO₂ generated in the CO₂ recovery unit 11 to be compressed by the CO₂ compressor 12.

Furthermore, with the CO₂ recovery system 10 according to this embodiment, since the steam turbine 13 is driven using discharged steam discharged from the high-pressure steam turbine 3 (see Fig. 1) provided for generating electricity, the discharged steam can be effectively used. Furthermore, by further using the discharged steam used in the steam turbine 13 with the reboiler 45 in the CO₂ recovery unit 11, the discharged steam can be used more effectively.

### {Second Embodiment}

Next, a CO₂ recovery system according to a second embodiment of the present invention will be described with reference to the drawings. As shown in Fig. 5, the CO₂ recovery system according to this embodiment is configured such that the CO₂ compressor is further equipped with a flow-rate control valve 51 that controls the flow rate of CO₂ supplied to the CO₂ compressor as compared with the CO₂ recovery system 10 shown in Fig. 2. In this embodiment, a flow-rate control unit 52 controls the degree of opening of the flow-rate control valve 51 so that the measured pressure P2 from the pressure sensor 18c reaches a predetermined target pressure.

### {Third Embodiment}

Next, a CO₂ recovery system according to a third embodiment of the present invention will be described with reference to the drawings. As shown in Fig. 6, the CO₂ recovery system according to this embodiment differs from the CO₂ recovery system according to the foregoing second embodiment in that it further includes a pressure sensor 18e that measures the pressure P3 of the compressed recovered CO₂ output from the CO₂ compressor 12, and a motor control unit 15' controls the auxiliary motor 14 in consideration of the measured pressure P3 measured by the pressure sensor 18e.

In this embodiment, the motor control unit 15' controls the auxiliary motor 14 so that the measured pressure P3 from the pressure sensor 18e reaches a predetermined target pressure.

Note that the configuration of the power station to which the CO₂ recovery system of the present invention is applied is not limited to that shown in Fig. 1 and can be broadly applied to power stations with other configurations as appropriate. Furthermore, the configuration of the CO₂ recovery unit 11 is also not limited to the configuration shown in Fig. 3 and can be changed to another configuration as appropriate.

In addition, the configurations described in the foregoing embodiments can be changed or omitted as appropriate so long as they remain within the scope of the spirit of the present invention.

### {Reference Signs List}

- 1: power generation system
- 2: exhaust gas boiler
- 3: high-pressure steam turbine
- 4: low-pressure steam turbine
- 5: condenser
- 10: CO₂ recovery system
- 11: CO₂ recovery unit
- 12: CO₂ compressor
- 13: steam turbine
- 14: auxiliary motor
- 15, 15': motor control unit
- 16: governor control unit
- 17: flow-rate control unit
- 18a, 18c, 18e: pressure sensor
- 18b: flow-rate sensor
- 18d: rotational-speed sensor
- 19a: governor
- 19b: flow-rate control valve
- 21: cooling tower
- 22: absorption tower
- 23: regeneration tower
- 45: reboiler
- 51: flow-rate control valve
- 52: flow-rate control unit
- L1, L3, L7: steam pipe
- L10, L11: CO₂ outlet pipe

## Claims

1. A carbon-dioxide recovery system comprising:
a power-generation steam turbine for use in power generation;
a CO₂ recovery unit configured to absorb and remove CO₂ in exhaust gas generated in a power station;
a compressor configured to compress the CO₂ removed by the CO₂ recovery unit;
a compressor steam turbine configured to drive the compressor;
an auxiliary motor configured to supplement the motive power for the compressor supplied by the compressor steam turbine;
a motor control unit configured to control the auxiliary motor; and
a rotational-speed sensor configured to measure the rotational speed of the compressor,
wherein the compressor steam turbine is driven by discharged steam discharged from the power-generation steam turbine; and
in the case where the rotational speed measured by the rotational-speed sensor is lower than a preset target rotational speed, the motor control unit controls the auxiliary motor so that the rotational speed matches the target rotational speed.

2. The carbon-dioxide recovery system according to Claim 1, wherein in the case where the rotational speed measured by the rotational-speed sensor is higher than or equal to the preset target rotational speed, the motor control unit controls the auxiliary motor so that the pressure of the CO₂ output from the CO₂ recovery unit reaches a preset predetermined target pressure.

3. The carbon-dioxide recovery system according to Claim 1, further comprising:
a flow-rate control valve configured to control flow rate of CO₂ supplied to CO₂ compressor; and
a flow-rate control unit configured to control the degree of opening of the flow-rate control valve so that the pressure of the CO₂ output from the CO₂ recovery unit reaches a preset predetermined target pressure.

4. The carbon-dioxide recovery system according to Claim 1, wherein the motor control unit controls the auxiliary motor so that the pressure of the compressed recovered CO₂ output from the compressor reaches a preset predetermined target pressure.

5. The carbon-dioxide recovery system according to Claim 1, wherein the pressure of discharged steam supplied to the compressor steam turbine is about 4 kg/cm²G or higher and 50 kg/cm²G or lower.
